# EUROPEAN PATENT SPECIFICATION

(11) **EP 1 613 147 B1**
(45) Date of publication and mention of the grant of the patent: **02.09.2009**
(21) Application number: 04725216.8
(22) Date of filing: 01.04.2004
(51) Int. Cl.: A01K 61/02

(54) **DEVICE FOR DISTRIBUTING FISH FEED**
VORRICHTUNG ZUR VERTEILUNG VON FISCHFUTTER
DISPOSITIF PERMETTANT DE DISTRIBUER DE LA NOURRITURE POUR POISSONS

(30) Priority: 02.04.2003 NO 20031504
(43) Date of publication of application: 11.01.2006
(73) Proprietor: Haug, Rune, 7900 Rörvik (NO)
(72) Inventor: Haug, Rune, 7900 Rörvik (NO)
(74) Representative: Khan, Mohammed Saiful Azam
(86) International application number: PCT/NO2004/000095
(87) International publication number: WO 2004/086857

(56) References cited:
- NO-B- 179 351
- NO-B1- 312 931

## Description

The present invention relates to a device as stated in the introduction to claim 1, for distributing fish feed from one or more storage tanks to a plurality of fish receptacles for fish farming. "Fish receptacle" may include any means for containing fish and similar marine organisms for rearing, including net cages, ponds, or any other fish container in water, on a vessel or on land. Also disclosed is a novel multiple valve for expanding the capacity of a device according to the invention.

### Background of the Invention

The expansion of fish farming, remanding distribution of fish feed to multiple fish receptacles including net cages and stationary ponds, has created a requirement for more efficient distribution of feed.

Research has shown that the fish will make more efficient use of the feed, when received and absorbed during the daylight time. For fish farming in the northern and southern part of the hemispheres, this will shorten the time available for distribution of feed in which the feed can be efficiently digested. Even a low gain in percentage of digested feed can give a large gain in the profit

From Norwegian patent publication 179351 (SØrskär) it is know a distribution system feeding a multiple of net cages with one single conduit or tube connecting the net cages in a series. For each net cage a valve assembly is provided, which can be controlled for feeding the net cages one after another.

In addition to requiring a multiple of costly valve assemblies, the serial feeding is time consuming. The control system and the equipment needed for this distribution system adds to the costs, both in installment and maintenance.

From Norwegian patent 312931 (Feeding Systems) it is known a feed distribution system with a storage container having two feed distribution valves, provided for distributing feed to two net cages simultaneously. This system has also severe capacity limitations.

A common disadvantage of both prior art distribution system is the failure in combining a rapid distribution with control of the supply of feed to the individual fish receptacles.

### Object of the Invention

The main object of the invention is to provide a device for distributing fish feed from one or more storage tanks to a plurality of fish receptacles for fish farming simultaneuously, which has a higher efficiency than the prior art devices. A particular object is to provide a device which can distribute a certain quantity of feed within a short period of time, to a multitude of fish receptacles, the device having least possible movable part and a simple control system.

Further, it is an object to provide a device with downsized conduits, maintaining the capacity needed for efficient distribution.

Outside the scope of the claimed invention is a simple and reliable multiple valve for expanding the capacity of the fish feed distribution device.

### The Invention

The invention is defined in claim 1.

The device according to the invention provides an improved means for distributing fish feed to several fish receptacles in a short time and with maximum flexibility in regard of supplying fish feed to the individual fish receptacles.

### Examples

In the following, embodiments of the invention will be described with refererence to the drawings, where
Fig. 1 shows a side view partly in section of a vessel for transport, storage and distribution of fish feed,
Fig. 2 shows a sectional plan view of the vessel in Fig. 1, and
Fig. 3 shows a sectional view of a part of a multiple valve device for expanding the capacity of the device according to the invention.

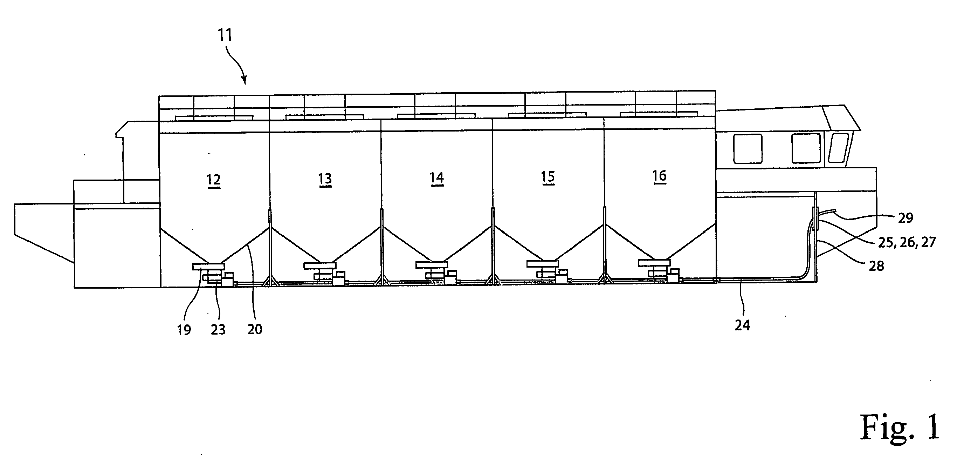

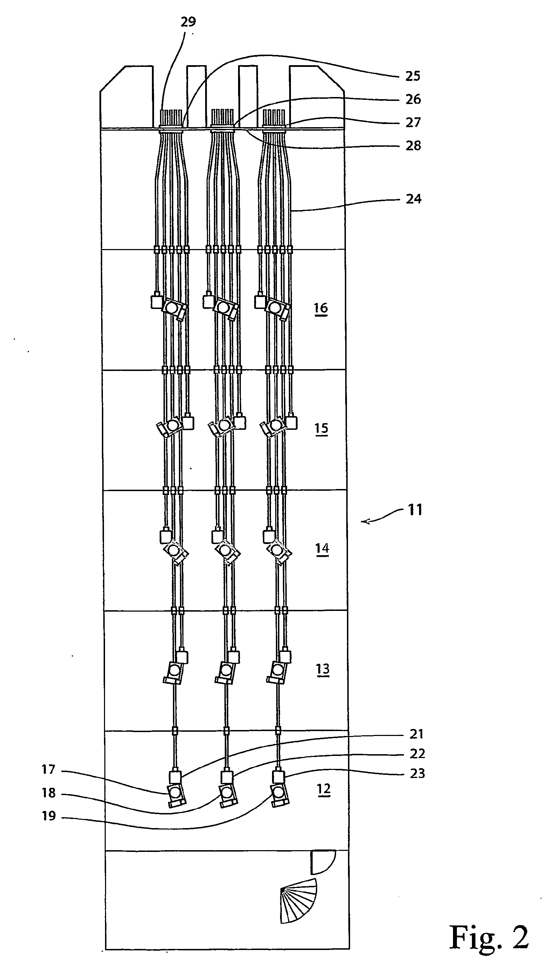

In Fig. 1 and 2 a vessel 11 for transport, storage and distribution of fish feed is shown, comprising five storage tanks 12, 13, 14, 15, 16 arranged lengthwise on the vessel. Each storage tank 12-16 has a triple outlet 17, 18, 19 at the bottom af a hopper bottom 20, each outlet being connected to a pump 21, 22, 23. Thus, the vessel 11 will have a total of 15 pumps, each with a conduit 24 leading to one of three connection assemblies 25, 26, 27 at one end of the vessel 11, arranged in a partition wall 28.

The connector assemblies 25-27 each comprises five connectors 29 for releasably connecting the in-vessel conduits 24 to an external series of conduits extending to one of several fish receptacles for distribution of fish feed thereto.

The connectors 29 may be any convenient tube connectors. In this embodiment, the pumps 21-23 will act as a valve and as transport mean and also as a control means, as each pump may be controlled individually in regard of time of operation and capacity of output.

This device will have a capacity corresponding to the number of pumps available. To expand the number of output conduits, a manual change of the connectors of the connectors 29 is necessary, which however is inconvenient.

Each of the three connector assemblies 25-27 may also comprise a multiple valve, with double or triple outlets, which will double or triple the maxmimum number of fish receptacles serviceable, without imparing the capacity notably and without loss of individual control.

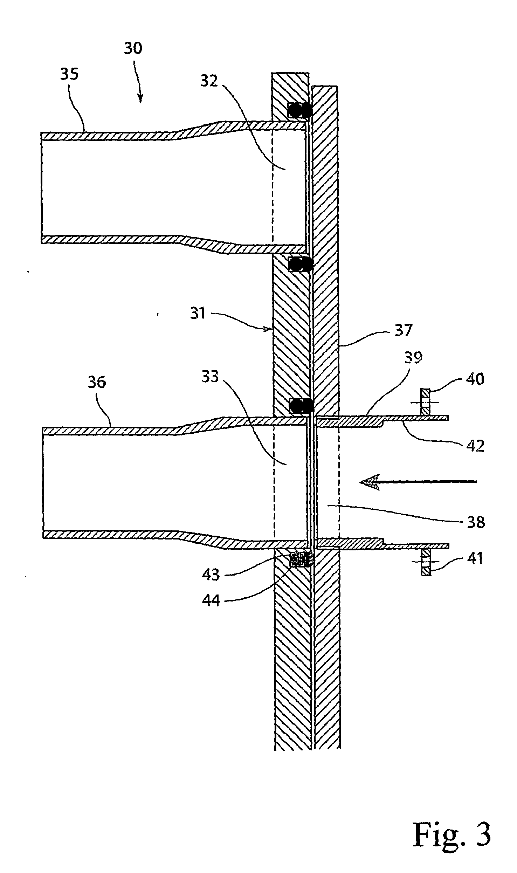

In fig. 3, a part of a novel multiple valve 30 is shown, which can combine the object of expanding the capacity of the distribution device and providing a connector allowing the releasing of the main part of the fish feed distribution device from the tubing arranged in the area of the fish receptacles, e.g. the net cages.

A basic element in the shown multiple valve, is a carrier plate 31 which is provided with two parallel rows of outlet openings 32, 33. The carrier plate 31 may be mounted in a partition wall or an outer wall 34 of the distribution device for which it is intended.

The parallel rows of outlet openings 32, 33 have a mutual axial distance of at least two times the diameter of an outlet opening 32, 33. In each opening a pipe socket 35, 36 is shrink fit, with the socket extending to the rear of the carrier plate 31 for connection to a conduit leading to a fish receptacle

On the front side of the multiple valve carrier plate 31, a rectangular slide plate 37 is arranged to be movable in a direction perpendicular to the direction of the rows of outlet openings 32, 33. The slide plate 37 has a row of inlet openings 38 parallel to the rows of outlet openings 32, 33 and with the same distance between neighbouring openings in the row.

For each inlet opening 38 an inlet pipe socket 39 is shrink fit into each of the inlet opening. At the free end of the inlet pipe sockets 39, a pair of radial lugs 40, 41, are arranged on opposite sides for the attachment of a conduit, which can be a hose or tube, connecting the inlet opening 38 to a storage tank outlet.. The inlet pipe socket 39 has an inner recess 42 at the end. The pipe sockets 35, 36 and 39 can be fasten in other suitable ways.

At each outlet opening 32, 23 an annular groove 43 is arranged concentric to the opening, facing the slide plate 37. In this groove 43 an annular gasket 44 is arranged. The annular gasket 44 may be of a polymer or rubber and it is projecting from the multiple valve carrier plate 31 for bridging any gap between the multiple valve carrier plate 31 and the slide plate 37.

The number of inlet openings 38 corresponds to the number of pumps 21-23. The number out outlet openings 32, 33 corresponds to the number of fish receptacles to be supplied with fish feed. In the case of a fish farming plant with e.g. 30 fish receptacles, and the use of a multiple valve as shown in the above embodiment, the number of outlet openings 32, 33 in each row and the number of inlet openings 38 may be fifteen. Thus, with a multiple valve with this capacity, fifteen fish receptacles can be provided with fish feed simultaneously, and fifteen further receptacles in an additional feeding sequence.

The connector assemblies 25-27 may be arranged in other positions on the vessel, including the opposite end. One may also contemplate multiple valves with more than two rows of outlet openings.

## Claims

1. A device for simultaneously distributing fish feed independently to multiple fish receptacles in a fish farming plant, the device comprising at least one fish feed tank (12-16), having respective at least one tank outlet (17-19) and a pump (21-23) for transport of fish feed to said fish receptacle(s) through a respective conduit (24), wherein each respective conduit (24) is connected to a connector assembly (27-29) at the exterior (28) of the device, for communication with a separate fish receptacle, **characterised in that** the device comprises a plurality of connector assemblies (25-27) to the multiple fish receptacles, the supply of fish feed out of respective tank outlets(17-19)/connector assemblies(25-27) being individually controllable using the respective pump(s) (21-23) to allow controlled simultaneous supply of fish feed to multiple fish receptacles.

2. A device according to claim 1 comprising a plurality of fish feed tanks (12-16).

3. A device according to claim 2 comprising five fish feed tanks (12-16).

4. A device according to any preceding claim, wherein each fish feed tank (12-16) comprises three tank outlets (17-19).

5. A device according to any preceding claim, in which each connector assembly (25-27) is arranged to allow releasable connection to external conduits for connection to said separate fish receptacles.

6. A device according to any preceding claim, in which each connector assembly (25-27) comprises a multiple valve (30) for connecting to said multiple fish receptacles.

7. A device according to claim 6 in which the multiple valve (3) comprises a stationary part (31) with an outlet opening (32) and a moveable part (37) with an inlet opening (38), wherein the moveable part (37) can be moved between an open and a closed position relatively to the opening in the stationary part,
wherein the valve (30) comprises a row of inlet openings (38) and at least two parallel rows of outlet openings,
said rows being perpendicular to the direction of movement of the moveable part (37),
each outlet opening (32,33) having a pipe socket (39) for connection to a conduit supplying fish feed to a fish receptacle,
the movable part (37) being a plate (37) with a row of inlet openings (38) corresponding to the rows of outlet openings (32,33) the movable plate being arranged for sliding movement on the stationary part (31) between a position wherein one of the rows of outlet openings is covering corresponding openings of the row of inlet openings, and a position in which it is covering openings of the other row.

8. A vessel (11) comprising the device of any preceding claim.

9. A vessel according to claim 8, wherein the fish feed tank(s) are arranged lengthwise along the vessel.

10. A method of controlling the simultaneous supply of fish feed to multiple fish receptacles in a fish farming plant using the device or vessel of any preceding claim.

## Patentansprüche

1. Eine Vorrichtung zur gleichzeitigen unabhängigen Verteilung von Fischfutter zu mehreren Fischaufnahmen in einer Fischzuchtanlage, wobei die Vorrichtung mindestens einen Fischfutterbehälter (12-16) aufweist, der jeweils mindestens einen Behälterauslaß (17-19) und eine Pumpe (21-23) zum Transport von Fischfutter zu der/den Fischaufnahme(n) durch eine jeweilige Leitung (24) besitzt, wobei jede jeweilige Leitung (24) mit einer Verbinderanordnung (27-29) an dem Äußeren (28) der Vorrichtung verbunden ist, zur Verbindung mit einer separaten Fischaufnahme, **dadurch gekennzeichnet, dass** die Vorrichtung mehrere Verbinderanordnungen (25-27) mit den mehreren Fischaufnahmen aufweist,
wobei die Zufuhr von Fischfutter aus den jeweiligen Behälterauslässen (17-19)/Verbinderanordnungen (25-27) unter Verwendung der jeweiligen Pumpe(n) (21-23) individuell steuerbar ist, um eine gesteuerte gleichzeitige Zufuhr von Fischfutter zu mehreren Fischaufnahmen zu ermöglichen.

2. Eine Vorrichtung gemäß Anspruch 1, mit einer Mehrzahl von Fischfutterbehältern (12-16).

3. Eine Vorrichtung gemäß Anspruch 2, mit fünf Fischfutterbehältern (12-16).

4. Eine Vorrichtung gemäß einem vorstehenden Anspruch,
wobei jeder Fischfutterbehälter (12-16) drei Behälterauslässe (17-19) aufweist.

5. Eine Vorrichtung gemäß einem vorstehenden Anspruch, bei der jede Verbinderanordnung (25-27) zur Ermöglichung einer lösbaren Verbindung mit externen Leitungen zur Verbindung mit den separaten Fischaufnahmen angeordnet ist.

6. Eine Vorrichtung gemäß einem vorstehenden Anspruch, bei der jede Verbinderanordnung (25-27) ein Mehrfachventil (30) zur Verbindung mit den mehreren Fischaufnahmen aufweist.

7. Eine Vorrichtung gemäß Anspruch 6, in der das Mehrfachventil (3) einen stationären Teil (31) mit einer Auslassöffnung (32) und einen beweglichen Teil (37) mit einer Einlassöffnung (38) aufweist, wobei der bewegliche Teil (37) zwischen einer offenen und einer geschlossenen Position relativ zu der Öffnung in dem stationären Teil bewegt werden kann,
wobei das Ventil (30) eine Reihe von Einlassöffnungen (38) und mindestens zwei parallele Reihen von Auslassöffnungen aufweist,
wobei die Reihen senkrecht zu der Richtung der Bewegung des beweglichen Teils (37) sind,
wobei jede Auslassöffnung (32,33) eine Rohrmuffe (39) zur Verbindung mit einer Leitung, welche Fischfutter zu einer Fischaufnahme liefert, besitzt,
wobei der bewegliche Teil (37) eine Platte (37) mit einer Reihe von Einlassöffnungen (38) ist, die den Reihen von Auslassöffnungen (32,33) entsprechen, wobei die bewegliche Platte für eine Gleitbewegung auf dem stationären Teil (31) zwischen einer Position, in der eine der Reihen von Auslassöffnungen entsprechende Öffnungen der Reihe von Einlassöffnungen abdeckt, und einer Position, in der sie Öffnungen der anderen Reihe abdeckt, angeordnet ist.

8. Ein Wasserfahrzeug (11) mit der Vorrichtung gemäß einem vorstehenden Anspruch.

9. Ein Wasserfahrzeug gemäß Anspruch 8, wobei der/die Fischfutterbehälter in Längsrichtung entlang dem Wasserfahrzeug angeordnet ist/sind.

10. Ein Verfahren zum Steuern der gleichzeitigen Zufuhr von Fischfutter zu mehreren Fischaufnahmen in einer Fischzuchtanlage unter Verwendung der Vorrichtung oder des Wasserfahrzeugs nach einem vorstehenden Anspruch.

## Revendications

1. Dispositif pour la distribution simultanée de nourriture pour poissons indépendamment dans de multiples réceptacles pour poissons dans un élevage de poissons, ledit dispositif comprenant au moins un réservoir de nourriture pour poissons (12-16) comportant respectivement au moins une sortie de réservoir (17-19) et une pompe (21-23) pour le transport de la nourriture pour poissons vers ledit ou lesdits réceptacles pour poissons à travers un conduit respectif (24), dans lequel chaque conduit respectif (24) est raccordé à un ensemble de raccord (27-29) à l'extérieur (28) du dispositif, pour une communication avec un réceptacle pour poissons séparé, **caractérisé en ce que** le dispositif comprend une pluralité d'ensembles de raccord (25-27) vers les multiples réceptacles pour poissons, l'apport de nourriture pour poissons par les sorties de réservoir respectives (17-19)/ensembles de raccord respectifs (25-27) pouvant être régulées individuellement grâce à l'utilisation de la ou des pompes respectives (21-23) pour permettre un apport simultané régulé de nourriture pour poissons à de multiples réceptacles pour poissons.

2. Dispositif selon la revendication 1, comprenant une pluralité de réservoirs de nourriture pour poissons (12-16).

3. Dispositif selon la revendication 2, comprenant cinq réservoirs de nourriture pour poissons (12-16).

4. Dispositif selon l'une quelconque des revendications précédentes, dans lequel chaque réservoir de nourriture pour poissons (12-16) comprend trois sorties de réservoir (17-19).

5. Dispositif selon l'une quelconque des revendications précédentes, dans lequel chaque ensemble de raccord (25-27) est agencé pour permettre un raccordement amovible à des conduits externes pour un raccordement auxdits réceptacles pour poissons séparés.

6. Dispositif selon l'une quelconque des revendications précédentes, dans lequel chaque ensemble de raccord (25-27) comprend une soupape multiple (30) pour un raccordement auxdits multiples réceptacles pour poissons.

7. Dispositif selon la revendication 6, dans lequel la soupape multiple (3) comprend une partie stationnaire (31) avec une ouverture de sortie (32) et une partie mobile (37) avec une ouverture d'entrée (38), la partie mobile (37) pouvant être déplacée entre une position ouverte et une position fermée par rapport à l'ouverture dans la partie stationnaire,
dans lequel la soupape (30) comprend une rangée d'ouvertures d'entrée (38) et au moins deux rangées parallèles d'ouvertures de sortie,
lesdites rangées étant perpendiculaires au sens de déplacement de la partie mobile (37),
chaque ouverture de sortie (32, 33) comportant un embout de tuyau (39) pour un raccordement à un conduit délivrant de la nourriture pour poissons à un réceptacle pour poissons,
la partie mobile (37) étant une plaque (37) avec une rangée d'ouvertures d'entrée (38) correspondant aux rangées d'ouvertures de sortie (32, 33), la plaque mobile étant agencée pour un mouvement de coulissement sur la partie stationnaire (31) entre une position dans laquelle l'une des rangées d'ouvertures de sortie couvre des ouvertures correspondantes de la rangée d'ouvertures d'entrée, et une position dans laquelle elle couvre des ouvertures de l'autre rangée.

8. Cuve (11) comprenant le dispositif de l'une quelconque des revendications précédentes.

9. Cuve selon la revendication 8, dans laquelle le ou les réservoirs de nourriture pour poissons sont agencés dans le sens de la longueur de la cuve.

10. Procédé de régulation de l'apport simultané de nourriture pour poissons à de multiples réceptacles pour poissons dans un élevage de poissons à l'aide du dispositif ou de la cuve selon l'une quelconque des revendications précédentes.
